(19) Europäisches Patentamt
European Patent Office
Office européen des brevets

(11) **EP 4 369 028 A1**

(12) **EUROPEAN PATENT APPLICATION**

(43) Date of publication:
**15.05.2024 Bulletin 2024/20**

(21) Application number: **22206599.7**

(22) Date of filing: **10.11.2022**

(51) International Patent Classification (IPC):
**G01S 7/41** *(2006.01)*       **G01S 13/931** *(2020.01)*
**G01S 13/86** *(2006.01)*       **G01S 7/04** *(2006.01)*

(52) Cooperative Patent Classification (CPC):
**G01S 7/417; G01S 7/04; G01S 13/865;**
**G01S 13/867; G01S 13/931;** G01S 2013/93271

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Aptiv Technologies Limited
St. Michael (BB)**

(72) Inventors:
• **Labusch, Sven
50737 Köln (DE)**
• **Becker, Adrian
40627 Düsseldorf (DE)**

• **Kossaczký, Igor
42117 Wuppertal (DE)**
• **Grumpe, Arne
45276 Essen (DE)**
• **Kästner, Florian
44793 Bochum (DE)**
• **Cennamo, Alessandro
42275 Wuppertal (DE)**
• **Meuter, Mirko
40699 Erkrath (DE)**

(74) Representative: **Bardehle Pagenberg
Partnerschaft mbB
Patentanwälte Rechtsanwälte
Prinzregentenplatz 7
81675 München (DE)**

(54) **INTERFACE FOR DETECTION REPRESENTATION OF HIDDEN ACTIVATIONS IN NEURAL NETWORKS FOR AUTOMOTIVE RADAR**

(57)    A computer-implemented method for analyzing radar data, the method comprising the steps: a) acquiring the radar data from one or more radar sensors; b) processing the radar data to derive output data comprising spatial points with associated features; c) receiving the output data of step b) as input data; and d) analyzing the radar data based on the input data.

Fig. 5A

**Description**

[Technical Field]

The present invention relates to methods and systems for analyzing radar data.

[Background]

Radar data acquired by radar sensors is analyzed in order to interpret the environment in the field-of-view of the radar sensors. For example, in automotive applications, one or more radar sensors mounted on a vehicle may be used to monitor an environment of the vehicle. The analysis of the acquired radar data may include the detection of objects such as other vehicles, pedestrians and/or other obstacles or the semantic segmentation the radar data or the semantic segmentation of image data of the environment acquired, for example, by a camera. The analysis of radar data is an essential prerequisite for various tasks, such as in autonomously driving vehicles.

Current methods of analyzing radar data employ the use of machine learning frameworks comprising, for example, multiple neural networks in order to detect objects.

EP 3 943 968 A1 discloses a computer implemented method for detection of objects in a vicinity of a vehicle comprising the following steps: acquiring radar data from a radar sensor; determining a radar data cube based on the radar data; providing the radar data cube to a plurality of layers of a neural network; resampling the output of the plurality of layers into a vehicle coordinate system; and detecting an object based on the resampled output.

Due to the "black box" nature of machine learning frameworks, there is, however, the problem that that the processing of low-level radar data such as time-domain radar data or range-Doppler domain radar data (e.g. a radar data cube) is difficult to understand. Hence, it can be difficult to identify the cause of issues such as mis-identifications.

There is, therefore, a need to provide a method for analyzing radar data in which the processing can be more readily understood.

[Summary]

The novel approach provides a method in which radar data acquired from one or more radar sensors is processed to derive an intermediate representation of the environment observed by the one or more radar sensors before being further analyzed. This way, the processing of the radar data can be more readily understood.

One embodiment relates to a computer-implemented method for analyzing radar data, the method comprising the steps: a) acquiring the radar data from one or more radar sensors; b) processing the radar data to derive output data comprising spatial points with associated features; c) receiving the output data of step b) as input data; and d) analyzing the radar data based on the input data.

Another embodiment relates to a computer program comprising: a first processing module comprising instructions which, when the program is executed by a computer, cause the computer to carry out the steps of: acquiring radar data from one or more radar sensors, and processing the radar data to derive output data comprising spatial points with associated features; and a second processing module comprising instructions which, when the program is executed by the computer, cause the computer to carry out the steps of: receiving the output data of the first processing module as input data, and analyzing the radar data based on the input data.

Further preferred embodiments are described in the dependent claims.

[Brief description of the drawings]

Embodiments of the present invention, which are presented for better understanding the inventive concepts, but which are not to be seen as limiting the invention, will now be described with reference to the figures in which:

Fig. 1A     shows a side view of a vehicle comprising a radar sensor in a front-right corner of a chassis of the vehicle;

Fig. 1B     shows a top view of a vehicle comprising a radar sensor in a front-right corner of a chassis of the vehicle;

Fig. 2     illustrates a radar data cube representing radar data in the range-Doppler domain;

Fig. 3     shows a schematic illustration of a computer-program architecture according to current methods;

Fig. 4     shows flowchart of a method for analyzing radar data according to an embodiment of the present invention;

Fig. 5A     shows a schematic illustration of a computer-program architecture according to an embodiment of the present invention;

Fig. 5B     shows a schematic illustration of a computer-program architecture according to an embodiment of the present invention;

Fig. 6     shows a visualization of intermediate information together with associated image data; and

Fig. 7 shows a schematic illustration of a hardware structure of a data processing apparatus according to an embodiment of the present invention.

[Detailed description]

The present invention shall now be described in conjunction with specific embodiments. The specific embodiments serve to provide the skilled person with a better understanding but are not intended to in any way restrict the scope of the invention, which is defined by the appended claims. In particular, the embodiments described independently throughout the description can be combined to form further embodiments to the extent that they are not mutually exclusive.

A radar sensor may comprise transmit and receive antennas. A transmit antenna may transmit a radar signal and the transmitted radar signal may be reflected by a target. A receive antenna may receive the reflected radar signal. Alternatively, a radar sensor may comprise transducer antennas capable of switching between transmitting and receiving radar signals. A pulse-Doppler radar sensor, for example, may transmit a radar signal comprising a set of coherent pulses repeated at a steady pulse repetition frequency (PRF).

The one or more radar antennas may, for example, be part of a frequency modulated continuous wave radar (FMCW) radar sensor. A FMCW radar sensor may be used to measure a range (distance to a target) based on time differences between transmitted and reflected radar signals. The FMCW radar sensor may transmit a continuous radar signal with alternating frequencies. For example, The FMCW radar may generate a frequency ramp, commonly referred to as a chirp.

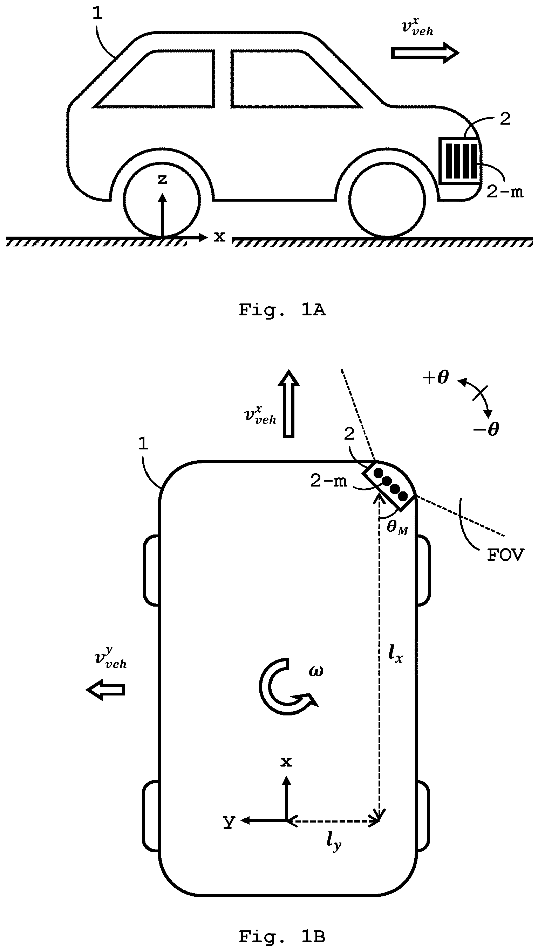

Figs. 1A and 1B show side vie and top view, respectively, of a vehicle 1 comprising a radar sensor 2 in a front-right (FR) corner of a chassis of the vehicle. In this example, the radar sensor 2 comprises four radar antennas (antenna elements) 2-m (m=1, ..., 4) arranged in parallel (to the z-axis) along a first arraying direction (in the x-y-plane). Within the field-of-view (FOV) of the radar sensor 2, reflected radar signals may hit the radar antennas 2-m with different phases.

Here, the Cartesian coordinate system defined by the x, y and z-axes as shown in Figs. 1A and 1B is usually referred to as the vehicle coordinate system (VCS). The origin of a two-dimensional VCS may be located at the center of the vehicle's rear axle, the x-axis may point along the forward direction and the y-axis may point to the left side of the vehicle. In a three-dimension version of the VCS, the origin may be located on the ground, below the midpoint of the rear axle, and the z-axis may point up from the ground so as to maintain the right-handed coordinate system.

The reflected radar signal may be received by each of the one or more radar antennas. Each antenna measures the reflected radar signal and may use a specified sampling frequency. The resulting measurement data may be stored in a measurement matrix having two dimensions. Each time a radar antenna receives a new pulse, a new row may be added to the measurement matrix, and measurements recorded during each pulse repetition interval (PRI) may be stored in said row.

The measurement data includes measurements of a so-called fast-time and measurements of a so-called slow-time. The fast-time measurements typically correspond to a small-scale time measurements of the reflected radar signal for each pulse. The number of fast-time measurements per pulse may depend on the specified sampling frequency. In other words, the columns of the measurement matrix record different fast-time measurements. The slow-time measurements typically correspond to the PRI. In other words, the rows of the measurement matrix record different slow-time measurements.

The measurement data may be subject to Doppler processing, wherein fast-time measurements are transformed to range data and slow-time measurements are transformed to range rate (Doppler) data. Doppler processing of the measurement data usually involves using a fast Fourier transform (FFT) as well as noise suppression techniques in order to transform the measurement data into the range-Doppler domain.

An introduction to Doppler processing of measurement data comprising fast-time and slow-time measurements is provided, for example, in chapter IV, section 17 of Reference [1] (a list of references is provided at the end of the present description).

In the following, the measurement data of the reflected radar signals received by the one or more radar antennas is referred to as radar data in the time-domain. Doppler-process measurement data is referred to as radar data in the range-Doppler domain. In other words, radar data in the time-domain is transformed into the range-Doppler domain using Doppler-processing. If no further specification is made, radar data may be represented either in the time-domain or in the range-Doppler domain.

The radar data in the range-Doppler domain may be binned using intervals for each of range data values and Doppler data values. A range bin refers to a bin of range data. A Doppler bin refers to a bin of Doppler data. The radar data in the range-Doppler domain from each of the one or more radar antennas may be aggregated in a three-dimensional representation which is commonly referred to as a radar data cube. The three dimensions of the radar data cube may parameterize the range data, Doppler data, and antenna index. For example, a slice of the radar data cube for a given antenna index may correspond to the Doppler-processed measurement matrix of the antenna corresponding to the given antenna index.

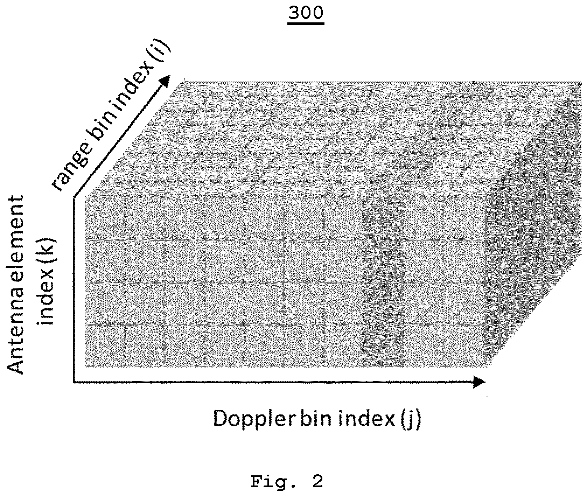

Fig. 2 illustrates a radar data cube 300 representing the radar data in the range-Doppler domain. As shown in Fig. 2 (left side), the radar data in the range-Doppler domain may be binned to form the radar data cube 300 with dimensions (size) $I \times J \times R$, wherein each cell may be identified by respective ones of $I$ range bin indices (along a range-dimension of the radar data cube 300), $J$ range rate (Doppler) bin indices (along a Doppler-dimension of the radar data cube 300), and $R$ antenna element indices (along an antenna element dimension of the radar data cube 300). Each range rate (Doppler) bin index is indicative of a radial velocity of a potential target relative to the radar sensor. Furthermore, each range bin index is indicative of a distance of a potential target from the radar sensor.

For each combination of range data (range bin) and Doppler data (Doppler bin) a corresponding beamvector refers to an array of one or more range-Doppler domain radar data samples, wherein each of the one or more range-Doppler domain radar data samples corresponds to the radar data in the range-Doppler domain acquired from a corresponding one of the one or more antennas. For example, for radar data in the range-Doppler domain acquired by four radar antennas, the beamvector may be represented as an array (or vector) of length four, wherein each element of the beamvector corresponds to a range-Doppler domain radar data sample from one of the four radar antennas for a specific range bin and Doppler bin.

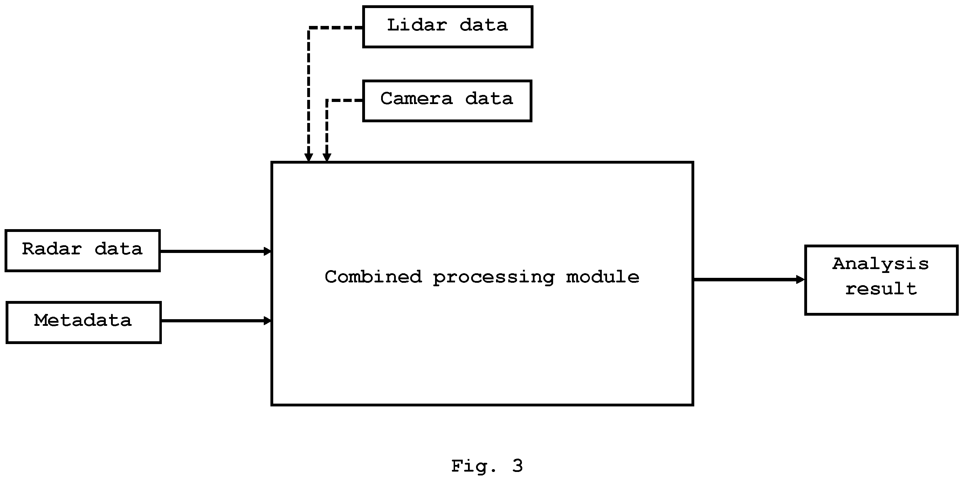

Current methods of analyzing radar data employ the use of machine learning frameworks in which radar data is processed using multiple neural networks. Between the multiple neural networks, data is transferred which is represented in a multi-dimensional feature space, wherein the dimensionality of the features space is usually very high. The multiple neural networks may be interconnected in a combined processing module as shown in Fig. 3. The combined processing module may receive radar data and associated metadata as input and may output an analysis result. In some implementations of current methods, the combined processing module may further receive lidar data and/or camera data as input.

The metadata may comprise information on an ego-motion of the one or more radar sensors, and mounting positions and mounting angles of the one or more radar sensors with respect to one another. The metadata may further comprise an information on a looktype that is indicative of a resolution of the radar data.

As shown in Figs. 1A and 1B, in a case where the one or more radar sensors are mounted on a vehicle, the information on the ego-motion of the vehicle may comprise the longitudinal and lateral velocities of the vehicle, $v_{veh}^x$ and $v_{veh}^y$, respectively, and the yaw rate $\omega$ of the vehicle. The mounting positions may comprise the longitudinal and lateral mounting positions, $l_x$ and $l_y$, respectively. The mounting angle of the one or more radar antennas on the vehicle may be denoted by $\theta_M$. The ego-motion of the vehicle may be determined based on the radar data or may be based on auxiliary measurement provided by a motion sensor such as, for example, an on-board odometry sensor, a GPS-based speedometer, or the like.

For example, the analysis result may comprise a set of boxes corresponding to bounding boxes of detected objects in the field-of-view of the one or more radar sensors. For another example, the analysis result may comprise semantic segmentation information of the radar data to identify occluded and free space in the vicinity of the vehicle. Instead or in addition thereto, the analysis results may comprise semantic segmentation information of image data, such as image data provided by a camera, and/or semantic segmentation information of point-cloud data, such as point-cloud data provided by a lidar sensor.

Reference [2] discloses the so-called RaDOR.Net which is an example for such a combined processing module comprising multiple interconnected neural networks.

The drawback of current methods is that it hardly possible to understand the internal processing performed by such a combined processing module. Even if data transferred between the multiple neural networks within the combined processing module is extracted it would be difficult to interpret the multi-dimensional feature space of the transferred data and to correlate the transferred data with the corresponding analysis result.

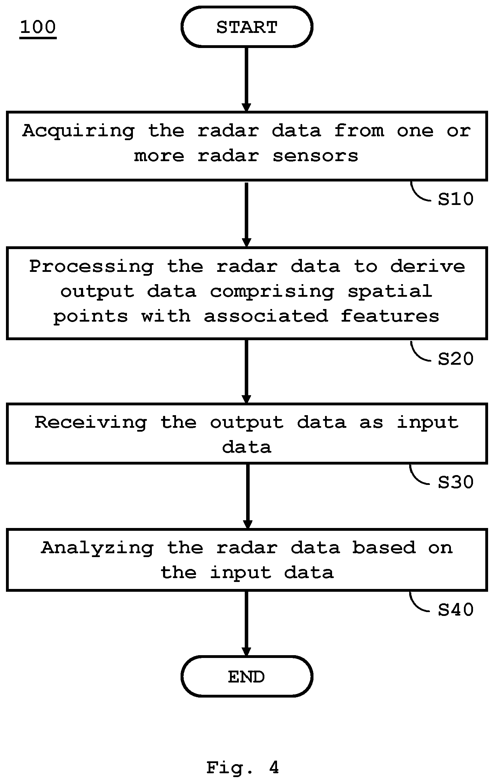

Fig. 4 shows flowchart of a method 100 for analyzing radar data according to an embodiment of the present invention.

In step S10, radar data is acquired from one or more radar sensors. The acquired radar data may correspond to the measurement data represented in the time domain. That is, the radar data may comprise fast-time measurements and slow-time measurements of a reflected radar signal. Alternatively, the acquired radar data may correspond to the Doppler-processed measurement data represented in the range-Doppler domain. That is, the radar data may comprise range data and range rate (Doppler) data. In other words, the acquired radar data includes range information and range rate (Doppler) information of objects in an environment of the one or more radar antennas. The acquired radar data may further be binned using intervals for each of range data values and Doppler data values and may be arranged in a radar data cube.

The one or more radar sensors may be mounted on the vehicle. The vehicle may comprise one or more radar sensors mounted on one or more corners of a chassis of the vehicle. For example, the vehicle may comprise four radar sensors mounted on a rear-left, rear-right, front-right and front-left corner of the chassis. An environment traversed by the vehicle may comprise moving objects and stationary objects.

In step S20, the radar data is processed to derive output data comprising spatial points with associated features. The spatial points may be given in a spatial (e.g.

two-dimensional or three-dimensional) coordinate system of the one or more radar sensors. The spatial coordinate system may be a polar coordinate system parametrized by a (radial) range and an (azimuth) angle. Alternatively, the spatial coordinate system may be a spherical coordinate system parameterized by a (radial) range, an (azimuth) angle and an elevation (i.e. polar angle). The spatial coordinate system may be the VCS of a vehicle comprising the one or more radar sensors.

Direction of arrival (DOA) estimation methods such as beam-forming fast Fourier transformation (beam-forming FFT) may be used to estimate the angle of incidence of the received electromagnetic signal reflected from an object. For example, for a radar sensor comprising a plurality of receive antennas arranged in parallel along a first arraying direction (i.e. an antenna array), the DOA may be measured in a plane spanned by the first arraying direction and an axis perpendicular to the antennas, e.g. the forward direction of the radar sensor (see also Fig. 1B). A polar coordinate system having a midpoint of the radar sensor at the origin may be defined such that the DOA is represented by the azimuth angle, in the following simply referred to as the angle $\theta$. For example, for a radar sensor with a 160° FOV, the angle $\theta$ may take values between -80° and +80°. When more than one radar sensors are employed a common polar coordinate system may be formed.

It should be noted, however, that a radar sensor may comprise another plurality of receive antennas (i.e. another antenna array) having a second arraying direction which is, for example, perpendicular to the first arraying direction. Likewise, when more than one radar sensors are employed, the more than one radar sensor may have different arraying directions. This way, another angle (e.g. the polar angle in a spherical coordinate system of the radar sensor) may be determined.

The features associated with the spatial points may be indicative of at least one of a range, an angle, a range rate, an amplitude indicative of an energy of a reflected radar signal, and a confidence score. The confidence score may be a value indicative of an impact on analyzing the radar data. The confidence score may be computed by a neural network during the processing of the radar data.

The processing of the radar data in step S20 may further involve using metadata such as information on an ego-motion of the one or more radar sensors, looktypes, and mounting positions and mounting angles of the one or more radar sensors with respect to one another.

In step S30, the output data of step S20 is received as input data. Then, in step S40, the radar data is analyzed based on the input data. In other words, the spatial points and associated features comprised in the input data are analyzed. The analyzing of the radar data may comprise detecting an object represented in the radar data. Instead or in addition thereto, the analyzing of the radar data may comprise semantic segmentation of the radar data, semantic segmentation of image data, such as image data provided by a camera, and/or semantic segmentation of point-cloud data, such as point-cloud data provided by a lidar sensor.

The processing of the radar data to derive the output data (step S20) may be performed using one or more first machine-learning models. The one or more first machine-learning models may be trained to optimize the detecting of an object using a ground-truth record. In other words, the training may be performed using training radar data with an associated ground-truth record. The ground-truth record may be generated independently using measurements of other sensors such as cameras and/or lidar sensors. Alternatively, the training radar data and associated ground-truth record may be generated using simulation.

The ground-truth record may be database of true positions, orientations, dimensions, velocities and/or types of true objects in the environment of the one or more radar sensors. During training, the training radar data is processed (step S20) using the one or more first machine-learning models to derive the output data. The features associated to the spatial points comprises in the output data may be derived by the one or more machine-learning models. The output data then is analyzed (step S40) to detect an object represented in the training radar data. The detected object may be compared to the ground-truth record. For example, a detected position, orientation, dimension, velocity and/or type of the detected objects may be compared to a true position, orientation, dimension, velocity and/or type of a true object.

If the detected object matches a true object, for example, based on a predetermined matching condition, the comparison results is that the detected object is real. Otherwise, the comparison result is that the detected object is not real (fake), i.e. a mis-identification occurred. Based on the comparison results internal parameters, such as weights of neural networks, of the one or more first machine-learning models may be adjusted such that a matching efficiency is improved. This way, by repeatedly performing the method 100 on different training radar data and comparing it to the associated ground-truth record, the one or more first machine-learning models are trained and the overall performance of the method 100 is improved.

The first machine-learning models may comprise an angle finding model trained to derive, for each spatial point, an angle indicative of a direction of arrival of a reflected radar signal. For example, angle finding module may receive radar data in the range-Doppler domain and derive, as a feature of each spatial point, the angle indicative of the direction of arrival of the reflected radar signal. During training, the derived angle may be compared to the true angle of a radar signal reflected at a true object comprised in the ground-truth record.

The first machine-learning models may comprise a confidence score model trained to derive, for each spatial point, a confidence score based on an impact on detecting the object. The confidence score may be a feature associated to each spatial point that may be used during the analyzing (step S40) to gauge the significance of each spatial point in order to detect the object. For example, a spatial point with a low confidence score may contribute less to the detection of the object compared to a spatial point with a high confidence score. This way, for example, the impact of jitter in the radar data, e.g. due to noise or multi-path reflections of the radar signal, on the detection of the object may be reduced.

The first machine-learning models may comprise a normalization compensation model trained to derive a normalization of the radar data. The normalization may be a feature associated to each spatial point that may specify a correction of an amplitude indicative of an energy of a reflected radar signal. The normalization may be derived for radar data in range-Doppler domain based on the angle and an initial amplitude estimate. The angle may be determined by beam-forming FFT or an angle finding model of the one or more first machine-learning models. The initial amplitude estimate may be computed as norm of a beamvector divided by the response of corner reflector with known radar cross-section as a function of range.

The detecting of the object based on the input data may be performed using one or more second machine-learning models. The one or more second machine-learning models may be trained to optimize the detection of the object using a ground-truth record. In other words, the training may be performed using training radar data with an associated ground-truth record. The training of the one or more second machine-learning models may be performed analogously to the above-described training of the one or more first-machine learning models.

The one or more second machine-learning models may comprise a regression model trained to combine the output data of step S20 with auxiliary data from one or more other sensors. The one or more other sensors may comprise at least one of a camera, a lidar sensor and another radar sensor. For example, features of spatial points such as range and range rate (Doppler) may be combined with image data from camera such that the spatial points are matched to pixels in the image data. This way, an object may be detected in the image data and the range and range rate (Doppler) of the detected object may be determined. The combined information may further be used for semantic segmentation of the image data.

The one or more second machine-learning models may comprise a classification model trained to classify spatial points. For example, a spatial point may be classified based on features such as the range and range rate. In an automotive environment, for example, spatial points with an associated angle pointing in a forward direction of a moving vehicle comprising the one or more radar sensor and with an associated range rate (Doppler) greater than a predetermined threshold may be classified as approaching traffic, wherein the predetermined threshold may be based on an ego-motion of the vehicle. Likewise, spatial points with an associated range rate (Doppler) within a certain interval may be classified as co-moving traffic.

It should be noted that the method 100 may employ the use of both the one or more first machine-learning models and the one or more second machine-learning models at the same time. In this case, all of the machine-learning models may be trained simultaneously. Alternatively, the one or more first machine-learning models may be trained separately and independently from the one or more second machine-learning models and vice versa.

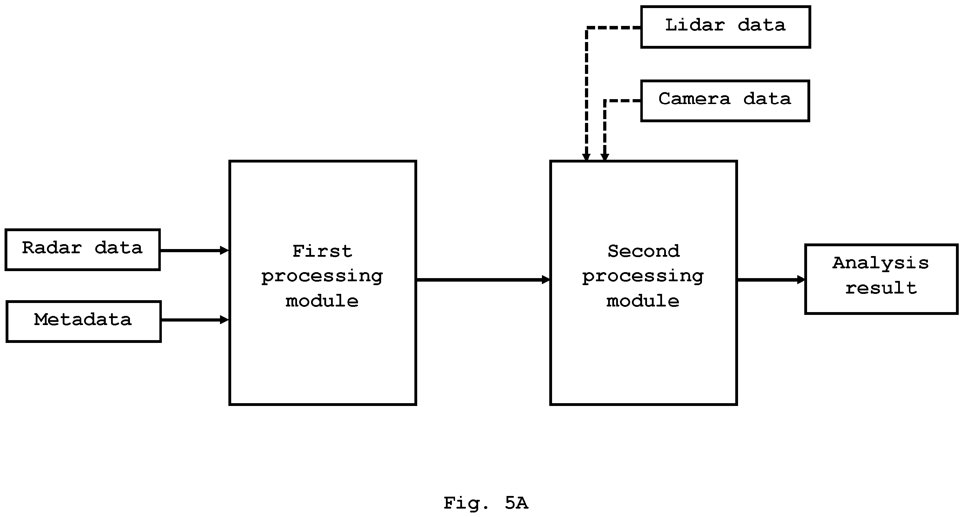

Fig. 5A shows a schematic illustration of a computer-program architecture according to an embodiment of the present invention. The computer program comprises instructions which, when the program is executed by a computer, cause the computer to carry out the method 100. The steps S10 and S20 of the method 100 may be implemented in a first processing module. That is, the first processing module acquires radar data from one or more radar sensors, and processes the radar data to derive output data comprising spatial points with associated features. The steps S30 and S40 of the method 100 may be implemented in a second processing module. That is, the second processing module receives the output data of the first processing module as input data, and analyzes the radar data based on the input data. In some implementations of the computer program, the second processing module may further receive auxiliary data such as lidar data and/or image data.

The method 100 may further comprise an interfacing step between steps S20 an S30, wherein the interfacing step comprises providing intermediate information based on the output data. The intermediate information may be a subset of the output data derived in step S20. For example, the intermediate information may comprise only a subset of the spatial points. For another example, the intermediate may comprise only certain features associated to the (subset of) spatial points.

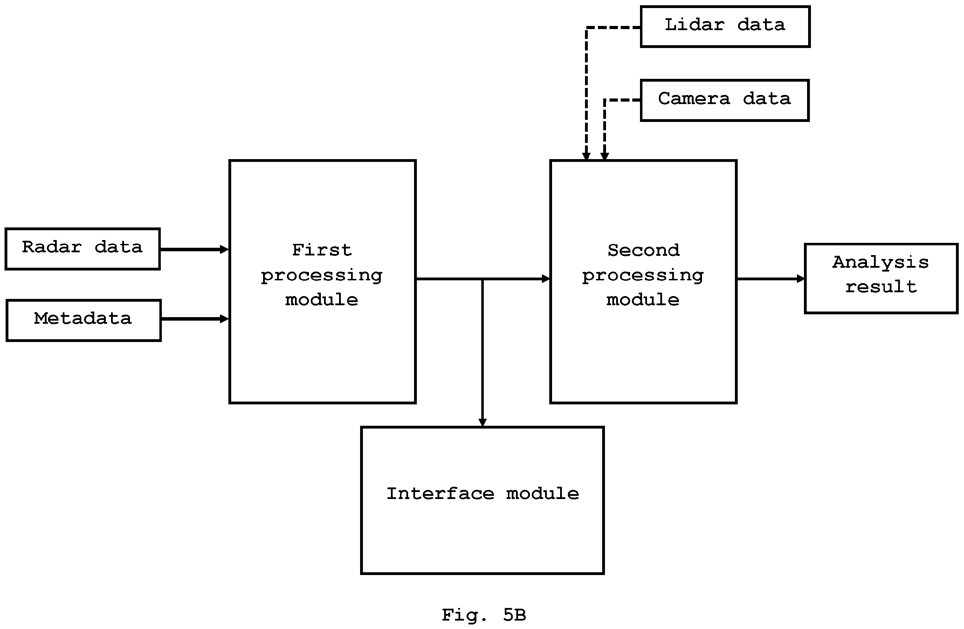

Fig. 5B shows a schematic illustration of a computer-program architecture according to an embodiment of the present invention. Here, the computer-program architecture described with reference to Fig. 5A is modified to further comprise an interface module. The interface module may be configured to perform the interfacing step described above. That is, the interface module may comprise instructions which, when the program is executed by the computer, cause the computer to carry out the step of providing intermediate information based on the output data.

The interfacing step may further comprise the step of visualizing the intermediate information in a spatial coordinate system of the one or more radar sensors. For example, the intermediate information may comprise spatial points with associated range, angle and range rate (Doppler). This way, the intermediate information may be visualized in a polar coordinate system of the one or more radar sensor, wherein spatial points are scattered across the polar coordinate system according to their associated range and angle. The range rate (Doppler) may be visualized by color-coding the spatial points according to a scale representing possible range rates.

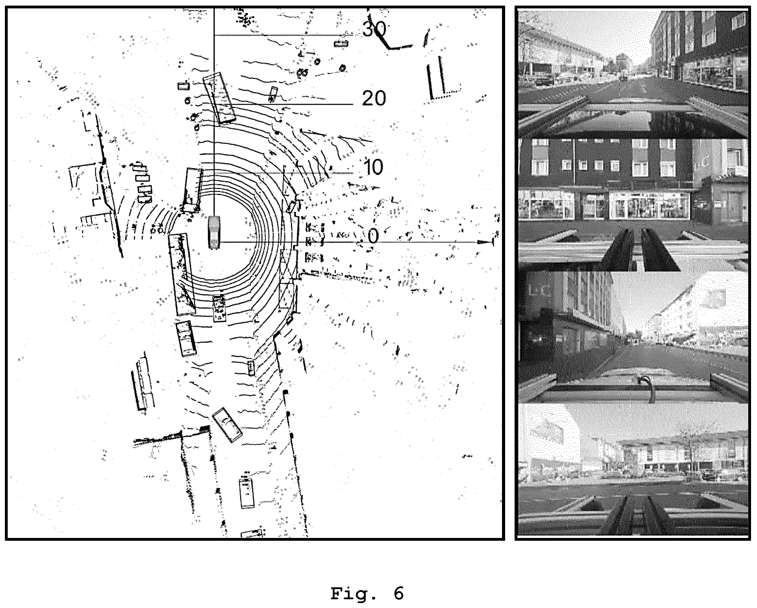

Fig. 6 shows a visualization of the intermediate information together with associated image data. The visualization of the intermediate data is shown on the left plot as a top view of a vehicle (solid box located in the center of the plot) comprising the one or more radar sensors and driving on a street in an urban environment. The urban environment of the vehicle is depicted to the right as the image data comprising four photos. The first photo shows a view from the vehicle towards the top part of the plot. The second photo shows a view from the vehicle towards the right part of the plot. The third photo shows a view from the vehicle towards the bottom part of the plot. The fourth photo shows a view from the vehicle towards the left part of the plot.

The left plot of Fig. 6 visualizes the intermediate information using black dots for the spatial points in a VCS of the vehicle. The hollow boxes in the plot represent other vehicles from the ground-truth record. It can be observed that the spatial points line up with the structures in the environment such as house walls and other vehicles. Although it is not visible in current example, the spatial points can be color-coded based on their associated range rates. This way, other vehicles moving towards or away from the one or more radar sensor of the vehicle in the center of the plot can be distinguished.

As shown in Fig. 6, the visualization of the intermediate information allows studying the radar data after the processing of step S20. Thus, it becomes possible to better understand what patterns are present in the radar data which is then subsequently analyzed in step S40. The intermediate information provided by the interfacing step thus improves the comprehensibility of the method 100 for analyzing radar data. Thereby, the different parts of the processing module can be separately analyzed, optimized and/or debugged.

It should be noted that while Fig. 6 showed a two-dimensional top view of an environment, the method 100 may be extended to radar data representing a three-dimensional environment. For example, the method 100 may be extended to further include an angle of elevation as a feature associated with the spatial points such that it becomes possible to analyze radar data representing a three-dimensional environment.

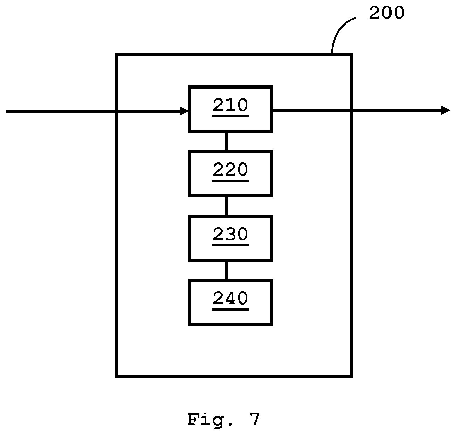

Fig. 7 is a schematic illustration of a hardware structure of a data processing apparatus comprising means for carrying out the steps of the methods of any of the embodiments disclosed above.

The data processing apparatus 200 has an interface module 210 providing means for transmitting and receiving information. The data processing apparatus 200 has also a processor 220 (e.g. a CPU) for controlling the data processing apparatus 200 and for, for instance, process executing the steps of the methods of any of the embodiments disclosed above. It also has a working memory 230 (e.g. a random-access memory) and an instruction storage 240 storing a computer program having computer-readable instructions which, when executed by the processor 220, cause the processor 220 to perform the methods of any of the embodiments disclosed above.

The instruction storage 240 may include a ROM (e.g. in the form of an electrically erasable programmable read-only memory (EEPROM) or flash memory) which is pre-loaded with the computer-readable instructions. Alternatively, the instruction storage 240 may include a RAM or similar type of memory, and the computer-readable instructions can be input thereto from a computer program product, such as a computer-readable storage medium such as a CD-ROM, etc.

In the foregoing description, aspects are described with reference to several embodiments. Accordingly, the specification should be regarded as illustrative, rather than restrictive. Similarly, the figures illustrated in the drawings, which highlight the functionality and advantages of the embodiments, are presented for example purposes only. The architecture of the embodiments is sufficiently flexible and configurable, such that it may be utilized in ways other than those shown in the accompanying figures.

Software embodiments presented herein may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nano systems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the embodiments described herein. Such software may include without limitation device drivers, operating systems, and user applications. Ultimately, such computer-readable media or storage device(s) further include software for performing example aspects, as described above.

Included in the programming and/or software of the system are software modules for implementing the procedures described herein. In some example embodiments herein, a module includes software, although in other example embodiments herein, a module includes hardware, or a combination of hardware and software.

While various embodiments of the present disclosure have been described above, it should be understood that they have been presented by way of example, and not limitation. It will be apparent to persons skilled in the relevant art(s) that various changes in form and detail can be made therein. Thus, the above-described example embodiments are not limiting.

[References]

[1] Principles of Modern Radar: Basic Principles, Volume 1; Richards, M.A. and Scheer, J.A. and Scheer, J. and Holm, W.A.; Institution of Engineering and Technology; 2010
[2] EP 3 943 968 A1

**Claims**

1. A computer-implemented method for analyzing radar data, the method comprising the steps:

   a) acquiring the radar data from one or more radar sensors;
   b) processing the radar data to derive output data comprising spatial points with associated features;
   c) receiving the output data of step b) as input data; and
   d) analyzing the radar data based on the input data.

2. The method according to claim 1, further comprising: an interfacing step between step b) and step c), the interfacing step comprising:
   providing intermediate information based on the output data.

3. The method according to claim 2, wherein the interfacing step further comprises the step of:
   visualizing the intermediate information in a spatial coordinate system of the one or more radar sensors.

4. The method according to any of the preceding claims, wherein the features are indicative of at least one of a range, an angle, a range rate, an amplitude indicative of an energy of a reflected radar signal, and a confidence score.

5. The method according any of the preceding claims, wherein analyzing the radar data based on the input data comprises detecting an object represented in the radar data.

6. The method according to claim 5, wherein the processing of the radar data to derive the output data is performed using one or more first machine-learning models.

7. The method according to claim 6, wherein the one or more first machine-learning models comprise at least one of:

   an angle finding model trained to derive, for each spatial point, an angle indicative of a direction of arrival of a reflected radar signal;
   a confidence score model trained to derive, for each spatial point, a confidence score based on an impact on detecting the object; and
   a normalization compensation model trained to derive a normalization of the radar data.

8. The method according to any of claims 6 to 7, wherein the one or more first machine-learning models are trained to optimize the detecting of the object using a ground-truth record.

9. The method according to any of claims 5 to 8, wherein the detecting of the object is based on the input data is performed using one or more second machine-learning models.

10. The method according to claim 9, wherein the one or more second machine-learning models comprise at least one of:

a regression model trained to combine output data of step b) with auxiliary data from one or more other sensors; and
a classification model trained to classify spatial points.

11. The method according to claim 10, wherein the one or more other sensors comprise at least one of a camera, a lidar sensor and another radar sensor.

12. The method according any of claims 10 to 11, wherein the one or more second machine-learning models are trained to optimize the detection of the object using a ground-truth record.

13. A data processing apparatus comprising means for carrying out the method according to any one of claims 1 to 12.

14. A vehicle comprising:

one or more radar sensors adapted to receive a reflected radar signal; and
the data processing apparatus according to claim 13.

15. A computer program comprising:

a first processing module comprising instructions which, when the program is executed by a computer, cause the computer to carry out the steps of:

acquiring radar data from one or more radar sensors, and
processing the radar data to derive output data comprising spatial points with associated features; and

a second processing module comprising instructions which, when the program is executed by the computer, cause the computer to carry out the steps of:

receiving the output data of the first processing module as input data, and
analyzing the radar data based on the input data.

16. The computer program according to claim 15, further comprising:
an interface module comprising instructions which, when the program is executed by the computer, cause the computer to carry out the step of:
providing intermediate information based on the output data.

17. A computer-readable storage medium having stored thereon the computer program according to claim 15 or 16.

Fig. 1A

Fig. 1B

300

Fig. 2

Fig. 3

<u>100</u>

```
        ┌─────────────┐
        │    START    │
        └─────────────┘
              │
              ▼
┌──────────────────────────────────────┐
│  Acquiring the radar data from one or │
│        more radar sensors             │
└──────────────────────────────────────┘
                              ╲ S10
              │
              ▼
┌──────────────────────────────────────┐
│  Processing the radar data to derive  │
│   output data comprising spatial      │
│   points with associated features     │
└──────────────────────────────────────┘
                              ╲ S20
              │
              ▼
┌──────────────────────────────────────┐
│  Receiving the output data as input   │
│               data                    │
└──────────────────────────────────────┘
                              ╲ S30
              │
              ▼
┌──────────────────────────────────────┐
│  Analyzing the radar data based on    │
│         the input data                │
└──────────────────────────────────────┘
                              ╲ S40
              │
              ▼
        ┌─────────────┐
        │     END     │
        └─────────────┘
```

Fig. 4

```
                                        ┌──────────────┐
                                   ┌ ─ ─│  Lidar data  │
                                   ╎    └──────────────┘
                                   ╎
                                   ╎    ┌──────────────┐
                                   ╎ ┌ ─│  Camera data │
                                   ╎ ╎  └──────────────┘
                                   ▼ ▼
┌──────────────┐          ┌──────────────┐          ┌──────────────┐          ┌──────────────┐
│  Radar data  │─────────▶│    First     │─────────▶│    Second    │─────────▶│   Analysis   │
└──────────────┘          │  processing  │          │  processing  │          │    result    │
                          │    module    │          │    module    │          └──────────────┘
┌──────────────┐          │              │          │              │
│   Metadata   │─────────▶│              │          │              │
└──────────────┘          └──────────────┘          └──────────────┘
```

Fig. 5A

Fig. 5B

Fig. 6

200

| 210 |
|-----|
| 220 |
| 230 |
| 240 |

Fig. 7

Europäisches
Patentamt

European
Patent Office

Office européen
des brevets

# EUROPEAN SEARCH REPORT

Application Number

EP 22 20 6599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 943 970 A1 (APTIV TECH LTD [BB]) 26 January 2022 (2022-01-26) * paragraph [0047] - paragraph [0101]; figures 1-8 * * paragraph [0035] - paragraph [0036]; claim 14 * * paragraph [1132] - paragraph [0137] * | 1-17 | INV. G01S7/41 G01S13/931 G01S13/86 G01S7/04 |
| X | US 2022/196798 A1 (CHEN CHULONG [US] ET AL) 23 June 2022 (2022-06-23) * paragraph [0312] - paragraph [0339]; figures 20-24 * * paragraph [0284] * * paragraph [0129]; claim 5; figure 1 * * paragraph [0065] * | 1-10, 12-17 | |
| A | US 2021/255304 A1 (FONTIJNE DANIEL HENDRICUS FRANCISCUS [NL] ET AL) 19 August 2021 (2021-08-19) * paragraph [0059] * | 7 | |
| A | WANG YIZHOU ET AL: "RODNet: Radar Object Detection using Cross-Modal Supervision", 2021 IEEE WINTER CONFERENCE ON APPLICATIONS OF COMPUTER VISION (WACV), IEEE, 3 January 2021 (2021-01-03), pages 504-513, XP033926984, DOI: 10.1109/WACV48630.2021.00055 [retrieved on 2021-05-03] * page 511, paragraph 6.3 * | 3 | TECHNICAL FIELDS SEARCHED (IPC) G01S |
| A | EP 4 024 077 A1 (APTIV TECH LTD [BB]) 6 July 2022 (2022-07-06) * paragraph [0075] * | 3 | |

The present search report has been drawn up for all claims

| Place of search | Date of completion of the search | Examiner |
|---|---|---|
| Munich | 19 April 2023 | Kaleve, Abraham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 20 6599

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2023

| Patent document cited in search report | | Publication date | Patent family member(s) | | Publication date |
|---|---|---|---|---|---|
| EP 3943970 | A1 | 26-01-2022 | CN | 113970743 A | 25-01-2022 |
| | | | EP | 3943968 A1 | 26-01-2022 |
| | | | EP | 3943970 A1 | 26-01-2022 |
| | | | US | 2022026568 A1 | 27-01-2022 |
| US 2022196798 | A1 | 23-06-2022 | NL | 2029854 A | 15-07-2022 |
| | | | TW | 202240199 A | 16-10-2022 |
| | | | US | 2022196798 A1 | 23-06-2022 |
| | | | WO | 2022139783 A1 | 30-06-2022 |
| US 2021255304 | A1 | 19-08-2021 | CN | 113167860 A | 23-07-2021 |
| | | | EP | 3887849 A2 | 06-10-2021 |
| | | | KR | 20210096607 A | 05-08-2021 |
| | | | TW | 202028778 A | 01-08-2020 |
| | | | US | 2021255304 A1 | 19-08-2021 |
| | | | WO | 2020113160 A2 | 04-06-2020 |
| EP 4024077 | A1 | 06-07-2022 | CN | 114720969 A | 08-07-2022 |
| | | | EP | 4024077 A1 | 06-07-2022 |
| | | | US | 2022214441 A1 | 07-07-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   EP 3943968 A1

**Non-patent literature cited in the description**

•   **RICHARDS, M.A. ; SCHEER, J.A. ; SCHEER, J. ; HOLM, W.A.** Principles of Modern Radar: Basic Principles. *Institution of Engineering and Technology,* 2010, vol. 1